# EUROPEAN PATENT APPLICATION

(11) **EP 4 346 168 A1**
(43) Date of publication of application: **03.04.2024**
(21) Application number: 22831631.1
(22) Date of filing: 07.06.2022
(51) Int. Cl.: H04L 12/00, H04L 41/00, H04L 41/08, H04L 41/084, H04W 24/04, G06F 15/173

(54) **NETWORK PROVISIONING CONFIGURATION METHOD AND APPARATUS**

(30) Priority: 29.06.2021 CN 202110726320
(71) Applicant: Huawei Technologies Co., Ltd., Shenzhen, Guangdong 518129 (CN)
(72) Inventor: LIU, Yunfei, Shenzhen, Guangdong 518129 (CN); PENG, Rongkun, Shenzhen, Guangdong 518129 (CN)
(74) Representative: Körber, Martin Hans
(86) International application number: PCT/CN2022/097395
(87) International publication number: WO 2023/273810

(57) **Abstract**

This application discloses a network deployment configuration method and apparatus, and belongs to the field of network technologies. The method includes: obtaining user intent, and obtaining first network deployment configuration information of a user network based on the user intent. The user intent is for deploying the user network, the user intent includes scenario information of the user network and service information of the user network, the scenario information indicates a usage scenario corresponding to the user network, the service information indicates at least one network service deployed in the user network, and the first network deployment configuration information includes device information of at least one network device for planning the user network, a network topology of the network device, and a configuration parameter of the network device.

## Description

This application claims priority to Chinese Patent Application No. 202110726320.5, filed on June 29, 2021 and entitled "NETWORK DEPLOYMENT CONFIGURATION METHOD AND APPARATUS", which is incorporated herein by reference in its entirety.

### TECHNICAL FIELD

This application relates to the field of network technologies, and in particular, to a network deployment configuration method and apparatus.

### BACKGROUND

Large-sized enterprises usually have professional Internet technology (internet technology, IT) departments responsible for network deployment (network construction and generation). However, many small and medium-sized enterprises do not have professional IT departments and cannot complete network deployment by themselves.

In a related technology, a scenario-based deployment technology is provided. A user first selects a scenario, and then the user enters models and quantities of various devices to be used in a network. A cloud device generates a basic network topology for the user based on the models and quantities of the various devices. Then, the user fills in specific virtual local area network (virtual local area network, VLAN) information and service set identifier (service set identifier, SSID) information, and the cloud device generates a configuration parameter for the user based on the VLAN information and the SSID information.

This deployment technology still cannot be used by users who are not familiar with network technologies.

### SUMMARY

This application provides a network deployment configuration method and an apparatus. In the method, network deployment configuration is implemented based on user intent, thereby reducing a requirement on knowledge and a technical capability of the user in terms of a network, and improving network deployment configuration efficiency.

According to a first aspect, this application provides a network deployment configuration method, and the method includes: obtaining user intent, and obtaining first network deployment configuration information of a user network based on the user intent. The user intent is for deploying the user network, the user intent includes scenario information of the user network and service information of the user network, the scenario information indicates a usage scenario corresponding to the user network, the service information indicates at least one network service deployed in the user network, and the first network deployment configuration information includes device information of at least one network device for planning the user network, a network topology of the network device, and a configuration parameter of the network device.

According to the network deployment configuration method provided in this application, corresponding network deployment configuration information is generated based on user intent. The user intent mainly includes scenario information of a user network and service information of the user network. That is, a user can perform network deployment configuration by using the method as long as the user knows a scenario of the user and a service that needs to be deployed. In addition, the output network deployment configuration information includes device information, a network topology, and a configuration parameter, so that the user can complete device purchase, connection, and configuration based on the network deployment configuration information. The method has a low requirement for the user to have network knowledge and a technical capability. Using the method to perform network deployment configuration can improve network deployment configuration efficiency. In addition, the method not only provides the device information and the network topology, but also provides the configuration parameter of a device, thereby resolving a network configuration problem of the user. This solution provides a network deployment configuration method which is simple in input and complex in output, ensuring ease of use and implementing network deployment for the user.

For example, the scenario information includes at least one of the following parameters: a scenario type, a site parameter, a network user quantity, and a network device quantity.

The scenario type includes an enterprise office scenario, a consumption place scenario, and even an individual family scenario, for example, a supermarket, an enterprise branch, and a restaurant. The site parameter includes a total area, an office quality, a sale region area, an outdoor area, and the like. The network user quantity includes an employee quantity, customer traffic, and the like. The network device quantity includes a wired device quantity, a wireless device quantity, and the like. The scenario information and the service information provided by the user are usually different under different scenario types.

For example, the service information includes at least one of the following services: an office service, a guest service, an Internet of Things IOT service, a security protection service, and a production service.

The office service includes a wired office service, an office Wi-Fi service, a conference service, a printing service, and the like. The guest service includes a guest Wi-Fi service, an outdoor Wi-Fi service, and the like. The IOT service includes a surveillance service. The security protection service includes a security protection network service. The production service includes a checkout service, an electronic price tag service, an electronic scale service, a commodity management service, and the like.

Optionally, the user intent further includes a networking quality tendency, and the networking quality tendency indicates intent of the user for network quality and a network cost of the user network. For example, the networking quality tendency includes a quality type, a standard type, an economical type, or the like. For another example, the networking quality tendency includes cost first, network quality first, or the like.

The network device varies with the networking quality tendency. For example, when the networking quality tendency is the quality type, the selected network device is usually a device with good performance. In this case, the user usually considers the network quality instead of the cost. When the networking quality tendency is the economical type, the selected network device usually is an entry-level device, and the device cost is controlled when the service needed by the user can be implemented.

In a possible implementation, the obtaining user intent is implemented in the following manner: outputting an initial user intent input interface, where the user intent input interface includes a scenario information input region and a service information input region; and obtaining scenario information input or selected through the scenario information input region and service information input or selected through the service information input region.

In this manner, a manner of obtaining the user intent can be simplified, and interaction with the user is implemented through the user intent input interface, so that a process of obtaining the user intent can be simplified. A requirement for the user to have network knowledge and a technical capability is low. In addition, input information needed for network deployment configuration can be quickly obtained, thereby improving network deployment configuration efficiency.

Herein, there are two different forms of the intent user intent input interface.

In a first form, the scenario information input region of the initial user intent input interface includes a scenario type option. In this case, the obtaining scenario information input or selected in the scenario information input region and service information input or selected in the service information input region includes: receiving a scenario type selected by the user through the scenario type option; displaying a corresponding scenario information option in the scenario information input region of the initial user intent input interface and displaying a corresponding service information option in the service information input region of the initial user intent input interface based on the scenario type; and obtaining scenario information input or selected through the scenario information option and service information input or selected through the service information option.

In this case, scenario information options and service information options corresponding to different scenario types are preset in a device that executes the network deployment configuration method.

In a second form, the service information input region of the initial user intent input interface includes a service information option. In this case, the obtaining scenario information input or selected in the scenario information input region and service information input or selected in the service information input region includes: receiving service information input or selected by the user through the service information option; displaying a corresponding scenario information option in the scenario information input region of the initial user intent input interface based on the service information; and obtaining scenario information input or selected through the scenario information option.

In this case, a device reversely deduces, based on a requirement of the service information, information that needs to be input by the user. That is, the device provides an intent recommendation capability, and can provide, based on the service information for any new scenario, an option that the user intends to input.

For example, when the service information input by the user through the service information input region of the initial user intent input interface includes three types of services: A, B, and C, the device reversely deduces, based on the services A, B, and C, an option that needs to be input by the user.

For example, the service A is a wireless Wi-Fi service, and a device that needs to be used by the wireless Wi-Fi service is an AP. However, region division of the user needs to be known for deploying AP, so that it is determined that the scenario information needs to include options such as an area and an office quantity.

The method is actually to deduce a user-side factor that affects a network based on a requirement of the user for the network. For example, the requirement of the user for the network is generally reflected in which services are provided, because for a user with low knowledge and a low technical capability in the network, the user can determine whether the network is needed only at a specific service layer. User-side factors that affect the network are generally reflected in a scenario of constructing the network by the user, such as customer traffic, an area, and an employee quality.

The user intent input interface may be displayed in a web page manner, or may be displayed through an app.

Optionally, in addition to the scenario information input region and the service information input region, the user intent input interface further includes a three-dimensional 3D scenario display region. In a process of obtaining the user intent, when the user selects a first network service through the service information input region, introduction information of the first network service is output at a location at which the first network service is arranged in the 3D scenario display region. The first network service is any network service.

The introduction information of the network service is provided, so that the user can accurately select a network service that the user needs in the user intent input interface, thereby ensuring network deployment configuration efficiency.

For example, the obtaining first network deployment configuration information of a user network based on the user intent includes:
obtaining the first network deployment configuration information of the user network based on the scenario information, the service information, and a deployment configuration model.

The deployment configuration model herein belongs to an artificial intelligence model. The deployment configuration model is obtained through training in the following manner:
obtaining second network deployment configuration information, where the second network deployment configuration information is device information and a configuration parameter of any user network after deployment, or the second network deployment configuration information is network deployment configuration information obtained by modification of a user based on third network deployment configuration information, and the third network deployment configuration information may not be applied to actual deployment; and
obtaining the deployment configuration model based on the scenario information, the service information, the second network deployment configuration information, and a to-be-trained deployment configuration model.

For example, the device information includes a device type, a device model, and a device quantity; and
the obtaining first network deployment configuration information of a user network based on the user intent includes:
determining the device type and the device model of the network device based on the service information;
determining the device quantity of the network device based on the scenario information;
generating the network topology based on the device type, the device model, and the device quantity of the network device; and
determining the configuration parameter of the network device based on the network topology and the service information.

Herein, the device type, the device model, the device quantity, the network topology, and the configuration parameter are determined by using the foregoing deployment configuration model. The deployment configuration model may include a plurality of submodels, and these submodels are respectively configured to determine the device type, the device model, the device quantity, the network topology, the configuration parameter, and the like.

For example, the service information indicates at least one network service; and
the determining the device type and the device model of the network device based on the service information includes:
determining a device type and a device model that match each network service in the at least one network service.

For example, the network device includes a terminal device, an access layer device, an aggregation layer device, a core layer device, and an egress border device; and
the determining the device quantity of the network device based on the scenario information includes:
substituting a first parameter that is in the scenario information and that corresponds to a first terminal device into a fitting function, to determine a quantity of first terminal devices, where the first terminal device is any terminal device, and the fitting function is a fitting function relationship between the first parameter and the quantity of first terminal devices; and
determining a quantity of access layer devices, a quantity of aggregation layer devices, a quantity of core layer devices, and a quantity of egress border devices based on a total quantity of all terminal devices.

In a possible implementation, the deployment configuration model can automatically study, to update the deployment configuration model and implement more accurate network deployment configuration.

For example, after the device quantity of the network device is determined, storing the quantity of first terminal devices; and updating, in response to a change in the quantity of first terminal devices due to modification, or a change in the quantity of first terminal devices when a network goes online, the fitting function based on the first parameter and a changed quantity of first terminal devices.

Optionally, the method further includes:
synchronizing the device information to a first system through a first application programming interface API, where the first system is configured for the user to purchase a network device.

Optionally, the method further includes:
synchronizing the configuration parameter to a second system through a second API, where the second system is configured to manage and control the network device.

Optionally, the method further includes:
delivering the configuration parameter to the network device through a network management interface.

Optionally, the obtaining first network deployment configuration information of a user network based on the user intent includes:
outputting a design document, an implementation solution, and an implementation script, where the design document includes a project background and a design objective that are obtained based on the user intent, the device information of the network device, and the network topology of the network device; the implementation solution includes the device information of the network device, the network topology of the network device, the configuration parameter of the network device, and a construction guide; and the implementation script includes an automation script generated based on the configuration parameter of the network device.

According to a second aspect, this application provides a network deployment configuration apparatus. The apparatus includes:
a first obtaining unit, configured to obtain user intent, where the user intent is for deploying a user network, the user intent includes scenario information of the user network and service information of the user network, the scenario information indicates a usage scenario corresponding to the user network, and the service information indicates at least one network service deployed in the user network; and
a second obtaining unit, configured to obtain first network deployment configuration information of the user network based on the user intent, where the first network deployment configuration information includes device information of at least one network device for planning the user network, a network topology of the network device, and a configuration parameter of the network device.

Optionally, the scenario information includes at least one of the following parameters: a scenario type, a site parameter, a network user quantity, and a network device quantity.

Optionally, the service information includes at least one of the following services: an office service, a guest service, an Internet of Things IOT service, a security protection service, and a production service.

Optionally, the user intent further includes a networking quality tendency, and the networking quality tendency indicates intent of a user for network quality and a network cost of the user network.

Optionally, the second obtaining unit is configured to output an initial user intent input interface, where the user intent input interface includes a scenario information input region and a service information input region; and
the first obtaining unit is configured to obtain scenario information input or selected through the scenario information input region and service information input or selected through the service information input region.

Optionally, the scenario information input region of the initial user intent input interface includes a scenario type option; and
the first obtaining unit is configured to receive a scenario type selected by the user through the scenario type option; display a corresponding scenario information option in the scenario information input region of the initial user intent input interface and display a corresponding service information option in the service information input region of the initial user intent input interface based on the scenario type; and obtain scenario information input or selected through the scenario information option and service information input or selected through the service information option.

Optionally, the service information input region of the initial user intent input interface includes a service information option; and
the first obtaining unit is configured to receive service information input or selected by the user through the service information option; display a corresponding scenario information option in the scenario information input region of the initial user intent input interface based on the service information; and obtain scenario information input or selected through the scenario information option.

Optionally, the user intent input interface further includes a three-dimensional 3D scenario display region; and
the first obtaining unit is configured to output, when the user selects a first network service through the service information input region, introduction information of the first network service at a location at which the first network service is arranged in the 3D scenario display region, where the first network service is any network service.

Optionally, the second obtaining unit is configured to obtain the first network deployment configuration information of the user network based on the scenario information, the service information, and a deployment configuration model.

Optionally, the first obtaining unit is configured to obtain second network deployment configuration information, where the second network deployment configuration information is device information and a configuration parameter of any user network after deployment, or the second network deployment configuration information is network deployment configuration information obtained by modification of the user based on third network deployment configuration information; and
obtain the deployment configuration model based on the scenario information, the service information, the second network deployment configuration information, and a to-be-trained deployment configuration model, where the deployment configuration model belongs to an artificial intelligence model.

Optionally, the device information includes a device type, a device model, and a device quantity; and
the second obtaining unit is configured to determine the device type and the device model of the network device based on the service information;
determine the device quantity of the network device based on the scenario information;
generate the network topology based on the device type, the device model, and the device quantity of the network device; and
determine the configuration parameter of the network device based on the network topology and the service information.

Optionally, the service information indicates at least one network service; and
the second obtaining unit is configured to determine a device type and a device model that match each network service in the at least one network service.

Optionally, the network device includes a terminal device, an access layer device, an aggregation layer device, a core layer device, and an egress border device; and
the second obtaining unit is configured to substitute a first parameter that is in the scenario information and that corresponds to a first terminal device into a fitting function, to determine a quantity of first terminal devices, where the first terminal device is any terminal device, and the fitting function is a fitting function relationship between the first parameter and the quantity of first terminal devices; and
determine a quantity of access layer devices, a quantity of aggregation layer devices, a quantity of core layer devices, and a quantity of egress border devices based on a total quantity of all terminal devices.

Optionally, the apparatus further includes:
a storage unit, configured to store the quantity of first terminal devices; and
the first obtaining unit is further configured to update, in response to a change in the quantity of first terminal devices due to modification, or a change in the quantity of first terminal devices when a network goes online, the fitting function based on the first parameter and a changed quantity of first terminal devices.

Optionally, the second obtaining unit is further configured to synchronize the device information to a first system through a first application programming interface API, where the first system is configured for the user to purchase a network device.

Optionally, the second obtaining unit is further configured to synchronize the configuration parameter to a second system through a second API, where the second system is configured to manage and control the network device.

Optionally, the second obtaining unit is further configured to deliver the configuration parameter to the network device through a network management interface.

Optionally, the second obtaining unit is configured to output a design document, an implementation solution, and an implementation script, where the design document includes a project background and a design objective that are obtained based on the user intent, the device information of the network device, and the network topology of the network device; the implementation solution includes the device information of the network device, the network topology of the network device, the configuration parameter of the network device, and a construction guide; and the implementation script includes an automation script generated based on the configuration parameter of the network device.

According to a third aspect, this application provides a network deployment configuration device. The network deployment configuration device includes a processor and a memory, the memory is configured to store a software program and a module, and the processor runs or executes the software program and/or the module stored in the memory, to enable the network deployment configuration device to implement the method in any possible implementation of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be separately disposed in different chips. A type of the memory and a manner of disposing the memory and the processor are not limited in embodiments of this application.

Optionally, the network deployment configuration device may be deployed on a public cloud to provide a network deployment configuration service.

According to a fourth aspect, this application provides a computer program (product). The computer program (product) includes computer program code, and when the computer program code is run by a computer, the computer is enabled to perform the method in any possible implementation of the first aspect.

According to a fifth aspect, this application provides a computer-readable storage medium. The computer-readable storage medium is configured to store program code executed by a processor, and the program code is for implementing the method in any possible implementation of the first aspect.

According to a sixth aspect, a chip is provided, including a processor. The processor is configured to invoke, from a memory, and run instructions stored in the memory, to enable a communication device installed with the chip to perform the method in any possible implementation of the first aspect.

According to a seventh aspect, another chip is provided, including an input interface, an output interface, a processor, and a memory. The input interface, the output interface, the processor, and the memory are connected through an internal connection path. The processor is configured to execute code in the memory. When the code is executed, the processor is configured to perform the method in any possible implementation of the first aspect.

According to an eighth aspect, a network deployment configuration system is provided. The system includes a network deployment configuration device and a first system, the first system is configured for a user to purchase a network device, and the network deployment configuration device implements the method in any possible implementation of the first aspect.

According to a ninth aspect, another network deployment configuration system is provided. The system includes a network deployment configuration device, a second system, and a network device, the second system is configured to manage and control the network device, and the network deployment configuration device implements the method in any possible implementation of the first aspect.

According to a tenth aspect, another network deployment configuration system is provided. The system includes a network deployment configuration device and a network device, and the network deployment configuration device implements the method in any possible implementation of the first aspect.

According to an eleventh aspect, another network deployment configuration system is provided. The system includes a network deployment configuration device, a first system, a second system, and a network device, the first system is configured for a user to purchase the network device, the second system is configured to manage and control the network device, and the network deployment configuration device implements the method in any possible implementation of the first aspect.

### BRIEF DESCRIPTION OF DRAWINGS

FIG. 1 is a schematic diagram of an application scenario according to an embodiment of this application;
FIG. 2 is a flowchart of a network deployment configuration method according to an embodiment of this application;
FIG. 3 is a flowchart of a network deployment configuration method according to an embodiment of this application;
FIG. 4 is a schematic diagram of an initial user intent input interface according to an embodiment of this application;
FIG. 5 is a schematic diagram of another initial user intent input interface according to an embodiment of this application;
FIG. 6 is a schematic diagram of a user intent input interface according to an embodiment of this application;
FIG. 7 is a schematic diagram of another user intent input interface according to an embodiment of this application;
FIG. 8 is a flowchart of determining first network deployment configuration information according to an embodiment of this application;
FIG. 9 is a schematic diagram of an overall process of network deployment configuration according to an embodiment of this application;
FIG. 10 is a block diagram of a network deployment configuration apparatus according to an embodiment of this application; and
FIG. 11 is a block diagram of a network deployment configuration device according to an embodiment of this application.

### DESCRIPTION OF EMBODIMENTS

To make the objectives, technical solutions, and advantages of this application clearer, the following further describes the implementations of this application in detail with reference to the accompanying drawings.

For ease of understanding of the technical solutions provided in embodiments of this application, an application scenario of this application is first described.

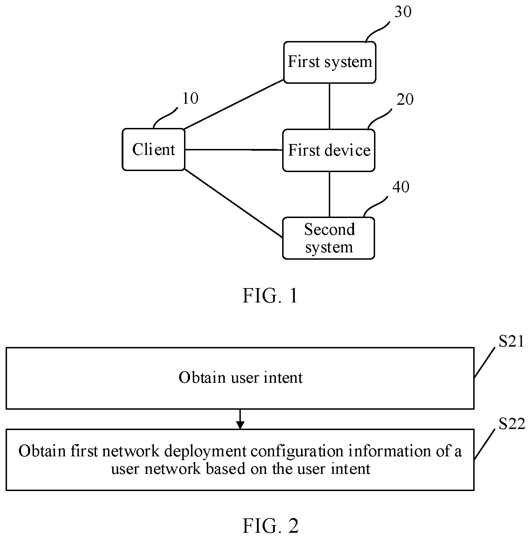

FIG. 1 is a schematic diagram of an application scenario according to an embodiment of this application. Refer to FIG. 1. The scenario includes a client 10, a first device 20, a first system 30, and a second system 40.

The client 10 submits a network deployment configuration request to the first device 20, and the first device 20 generates network deployment configuration information based on the request of the client 10 and provides the network deployment configuration information for the client 10, so that the client 10 can perform network deployment based on the network deployment configuration information.

The client 10 herein includes but is not limited to a terminal device such as a personal computer or a mobile phone, and the first device 20 is a server, a server cluster, or the like.

Optionally, in the application scenario provided in this embodiment of this application, the first system 30 is further included. The first system 30 may be a device ordering system, and can output, to the client 10 when the network deployment configuration information is generated, a purchase page or an order of a network device needed for implementing the network deployment.

Optionally, in the application scenario provided in this embodiment of this application, the second system 40 is further included. The second system 40 may be a network management system, and can manage and control an established user network. For example, after the network deployment configuration information is generated, a configuration parameter in the deployment configuration information is delivered to each network device.

FIG. 2 is a flowchart of a network deployment configuration method according to an embodiment of this application. The method may be performed by a first device 20 in an application scenario. The foregoing first device may be deployed in a public cloud. A client 10, a first system 30, and a second system 40 access the foregoing first device through the Internet internet. The foregoing first device generates network deployment configuration information based on a request of the client 10, and provides a network deployment configuration cloud service for the client 10. The first device may alternatively be deployed in a data center or a private cloud. As shown in FIG. 2, the method includes the following steps.

S21: Obtain user intent.

The user intent is for deploying a user network, the user intent includes scenario information of the user network and service information of the user network, the scenario information indicates a usage scenario corresponding to the user network, and the service information indicates at least one network service deployed in the user network. The scenario information includes at least one of the following: a scenario type, a site parameter, a network user quantity, and a network device quantity. The scenario type refers to a specific scenario of a to-be-configured network. For example, an office scenario refers to that the to-be-configured network is used in an office scenario, and a retail scenario refers to that the to-be-configured network is used in a retail scenario, such as a small retail store, a medium-sized retail supermarket, or a large shopping mall. The site parameter refers to an area, a floor number, a quantity of people that can be accommodated, or customer traffic of a site corresponding to the to-be-configured network. The network user quantity refers to a quantity of users using the to-be-configured network, and the network device quantity refers to a quantity of terminals accessing the to-be-configured network. The service information includes at least one of the following services: an office service, a guest service, an Internet of Things IOT (internet of things) service, a security protection service, and a production service. The office service refers to that a service provided for a user in the to-be-configured network is an office type, for example, network access authentication for wired and wireless office terminals, a Web web page access application, an email application, or a voice and video conference application. The guest service refers to that a service provided for the user in the to-be-configured network enables a temporary guest to access the network, for example, a network access service provided for a terminal of the temporary guest. The Internet of Things IOT service refers to that the to-be-configured network provides the user with an Internet of Things terminal and an application, for example, the to-be-configured network provides a temperature control service in an office based on a temperature sensor. The security protection service refers to a video surveillance service, an access control service, an object loss alarm service, or the like provided by the to-be-configured network for the user. The production service refers to a production service provided by the to-be-configured network for the user, for example, in a retail scenario, the production service includes a checkout service, a commodity management service, a logistics business, and the like.

For example, a user A plans to deploy a plurality of office branch networks, and scenario information and service information of each network in the plurality of office branch networks are the same. Service intent of the user A is to provide wired and wireless office services for employees in the office branches with an area of 500 square meters, provide an Internet access service for a temporary guest, and provide a video surveillance service and an employee access control service for a part of security protection employees. Based on the foregoing user intent, the scenario information includes an area of an office place in which each office branch network is located, a quantity of employees accommodated in the office place, and the like. The service information includes a type of a service provided in each office branch network, for example, the wired office service, the wireless office service, the guest service, and the security protection service. The security protection service further includes the video surveillance service, the access control service, and the like.

S22: Obtain first network deployment configuration information of the user network based on the user intent.

The first network deployment configuration information includes device information of at least one network device for planning the user network, a network topology of the network device, and a configuration parameter of the network device.

According to the network deployment configuration method provided in this application, corresponding network deployment configuration information is generated based on user intent. The user intent mainly includes scenario information of a user network and service information of the user network. That is, a user can perform network deployment configuration by using the method as long as the user knows a scenario of the user and a service that needs to be deployed. In addition, the output network deployment configuration information includes device information, a network topology, and a configuration parameter, so that the user can complete device purchase, connection, and configuration based on the network deployment configuration information. The device information includes a device type, a device model, and a device quantity of at least one network device in the user network. The configuration parameter is a service configuration on the network device. The service configuration includes a service feature and a corresponding feature parameter, for example, a Layer 2 interface service, a Layer 3 interface service, a network authentication service, a routing service, or the like of the network device. The method has a low requirement for the user to have network knowledge and a technical capability. Using the method to perform network deployment configuration can improve network deployment configuration efficiency. In addition, the method not only provides the device information and the network topology, but also provides the configuration parameter of a device, thereby resolving a network configuration problem of the user. This solution provides a network deployment configuration method which is simple in input and complex in output, ensuring ease of use and implementing network deployment for the user.

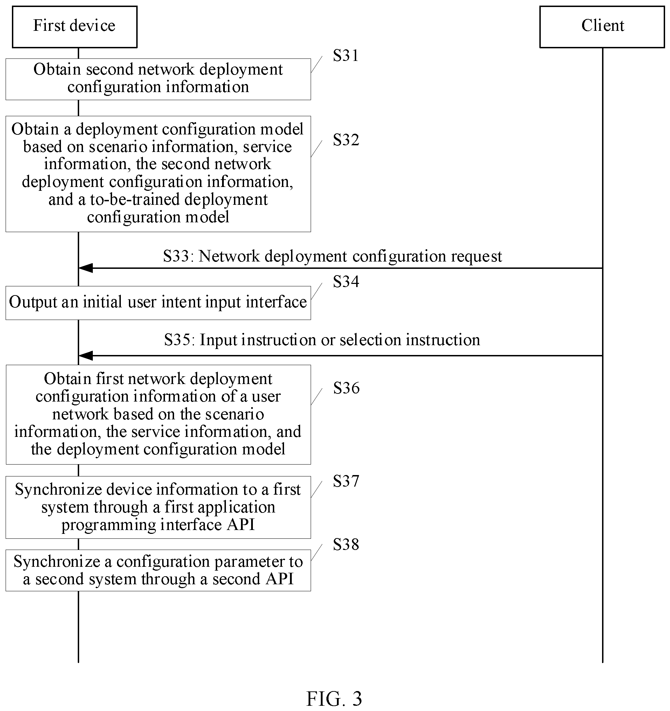

FIG. 3 is a flowchart of a network deployment configuration method according to an embodiment of this application. The method may be performed by a first device and a client in an application scenario. As shown in FIG. 3, the method includes the following steps.

S31: The first device obtains second network deployment configuration information, where the second network deployment configuration information is device information and a configuration parameter of any user network after deployment, or the second network deployment configuration information is network deployment configuration information obtained by modification of a user based on third network deployment configuration information.

The second network deployment configuration information herein is network deployment configuration information of a network that has been deployed, or network deployment configuration information obtained by the user by modifying the third network deployment configuration information obtained through a network deployment technology in a related technology.

S32: The first device obtains a deployment configuration model based on scenario information, service information, the second network deployment configuration information, and a to-be-trained deployment configuration model, where the deployment configuration model belongs to an artificial intelligence model.

The second network deployment configuration information obtained in step S31, and the scenario information and the service information that correspond to the second network deployment configuration information are used as a sample to train the deployment configuration model.

The second network deployment configuration information herein includes a plurality of samples, and the deployment configuration model is obtained by training the plurality of samples.

The deployment configuration model herein may include a plurality of submodels, for example, a device type and device model determining submodel, a device quantity determining submodel, a topology generation submodel, and a configuration parameter determining submodel.

The device type and device model determining submodel may determine a device type and a device model based on network service information. The device quantity determining submodel may determine a device quantity of a network device based on the scenario information. The topology generation submodel may generate a network topology based on the device type, the device model, and the device quantity. The configuration parameter determining submodel may determine a configuration parameter of the network device based on the network topology and the service information.

For example, the device type and device model determining submodel includes mapping relationships between a network service and the device type and between the network service and the device model; the configuration parameter determining submodel includes a mapping relationship between the network service and a configuration parameter; the device quantity determining submodel includes a fitting function relationship between a parameter in the scenario information and the device quantity, and a quantity relationship between a lower-layer device and an upper-layer device; and the network topology model includes a generation rule of the network topology.

S33: The client sends a network deployment configuration request to the first device. The first device receives the network deployment configuration request sent by the client.

For example, a page or an application (application, APP) client corresponding to a network deployment configuration service is deployed on the first device, and when the user accesses the page or the APP client, or logs in to the page or the APP client, the network deployment configuration request is sent to the first device, where the network deployment configuration request may carry a user identifier.

S34: The first device outputs an initial user intent input interface.

User intent (intent) refers to a network requirement generated by the user based on a scenario and service. The user intent is closely related to the scenario and service of the user, and is easy to understand and can be provided by the user.

For any scenario type, the user intent that needs to be known for performing network deployment configuration mainly includes the following aspects.

1. Scenario-related information, such as a scenario type, an area, a people flow, a wired user quantity, and a wireless user quantity. A crowd density, a wired occupied port quantity, area distribution, and the like in a scenario may be determined by using the information. 2. Enterprise-related information, such as the area, an employee quantity, a wired terminal quantity, and an IOT device quantity. The wired occupied port quantity and the like may be determined by using the information. 3. Service-related information, such as an electronic price tag, electronic scale and checkout network sharing, independent checkout network planning, checkout network SSID hiding, and media access control (media access control, MAC) authentication for an Internet protocol (internet protocol, IP) phone and access control. The device model, VLAN planning, SSID planning, authentication manner planning, and the like may be determined by using the information. 4. User tendency-related information, such as a network requirement, and an existing device range of the user. A networking structure, model selection, a model recommendation range, and the like may be determined by using the information.

Information of the foregoing several aspects overlaps, and a determined configuration is still not concise enough for the user. Therefore, these aspects are summarized into two aspects: the scenario information and the service information in this application.

Correspondingly, a user intent input interface includes a scenario information input region and a service information input region. The scenario information input region is configured for the user to input the scenario information, and the scenario information includes at least one of the following: a scenario type, a site parameter, a network user quantity, and a network device quantity. The service information input region is configured for the user to input the service information, and the service information includes at least one of the following: an office service, a guest service, an IOT service, a security protection service, and a production service.

The scenario type refers to a specific scenario of a to-be-configured network. For example, an office scenario refers to that the to-be-configured network is used in an office scenario, and a retail scenario refers to that the to-be-configured network is used in a retail scenario, such as a small retail store, a medium-sized retail supermarket, or a large shopping mall. The site parameter refers to an area, a floor number, a quantity of people that can be accommodated, or customer traffic of a site corresponding to the to-be-configured network. The network user quantity refers to a quantity of users using the to-be-configured network, and the network device quantity refers to a quantity of terminals accessing the to-be-configured network. The office service refers to that a service provided for a user in the to-be-configured network is an office type, for example, network access authentication for wired and wireless office terminals, a Web web page access application, an email application, or a voice and video conference application. The guest service refers to that a service provided for the user in the to-be-configured network enables a temporary guest to access the network, for example, a network access service provided for a terminal of the temporary guest. The Internet of Things IOT service refers to that the to-be-configured network provides the user with an Internet of Things terminal and an application, for example, the to-be-configured network provides a temperature control service in an office based on a temperature sensor. The security protection service refers to a video surveillance service, an access control service, an object loss alarm service, or the like provided by the to-be-configured network for the user. The production service refers to a production service provided by the to-be-configured network for the user, for example, in a retail scenario, the production service includes a checkout service, a commodity management service, a logistics business, and the like.

For example, a user A plans to deploy a plurality of office branch networks, and scenario information and service information of each network in the plurality of office branch networks are the same. Service intent of the user A is to provide wired and wireless office services for employees in the office branches with an area of 500 square meters, provide an Internet access service for a temporary guest, and provide a video surveillance service and an employee access control service for a part of security protection employees. Based on the foregoing user intent, the scenario information includes an area of an office place in which each office branch network is located, a quantity of employees accommodated in the office place, and the like. The service information includes a type of a service provided in each office branch network, for example, the wired office service, the wireless office service, the guest service, and the security protection service. The security protection service further includes the video surveillance service, the access control service, and the like.

Correspondingly, the scenario information input region includes a scenario type selection button, a site parameter option, a network user quantity option, and a network device quantity option. The service information input region includes an office service option, a guest service option, an Internet of Things IOT service option, a security protection service option, and a production service option. The option herein may be an input box, a selection box, or the like.

In step S34, the first device does not directly output the user intent input interface, but outputs the initial user intent input interface. For different scenario types, the service information and the scenario information are different. Therefore, the initial user intent input interface includes only a part of options. After the user performs input based on the part of options, other options are displayed based on the input content, to form a complete user intent input interface.

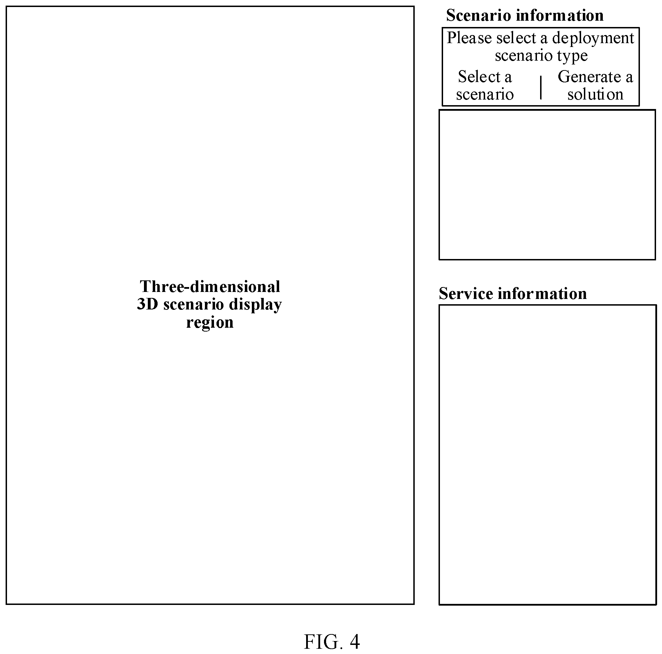

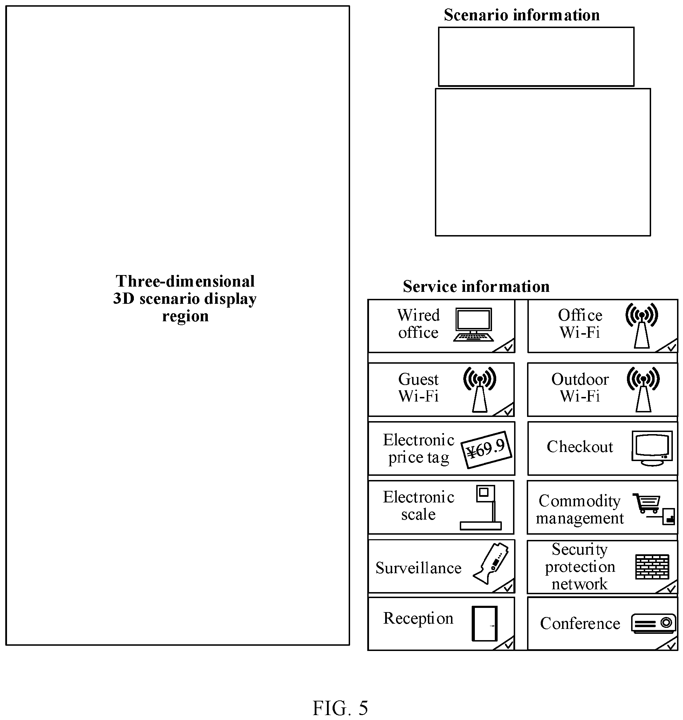

For example, there are two different forms of the initial user intent input interface. The following provides descriptions with reference to FIG. 4 and FIG. 5.

FIG. 4 is a schematic diagram of an initial user intent input interface according to an embodiment of this application. Refer to FIG. 4. A scenario information input region of the initial user intent input interface includes a scenario type option for a user to select a scenario type. In this case, scenario information options and service information options corresponding to different scenario types are preset in a first device. After the user selects the scenario type, the first device may display, on the initial user intent input interface, a scenario information option and a service information option corresponding to the scenario type for the user to further input scenario information and service information.

FIG. 5 is a schematic diagram of another initial user intent input interface according to an embodiment of this application. Refer to FIG. 5. A service information input region of the initial user intent input interface includes a service information option for a user to select a service. In this case, after the user selects the service, a first device reversely deduces, based on the service selected by the user, information that needs to be input by the user. That is, the first device provides an intent recommendation capability, and can provide, based on service information for any new scenario, an option that the user intends to input. On the initial user intent input interface, the option is thereby displayed for the user to further input scenario information and service information.

S35: The client sends, to the first device, an input instruction or a selection instruction performed by the user through the initial user intent input interface. The first device receives the input instruction or the selection instruction sent by the client, and obtains scenario information input or selected by the client through the scenario information input region and service information input or selected by the client through the service information input region.

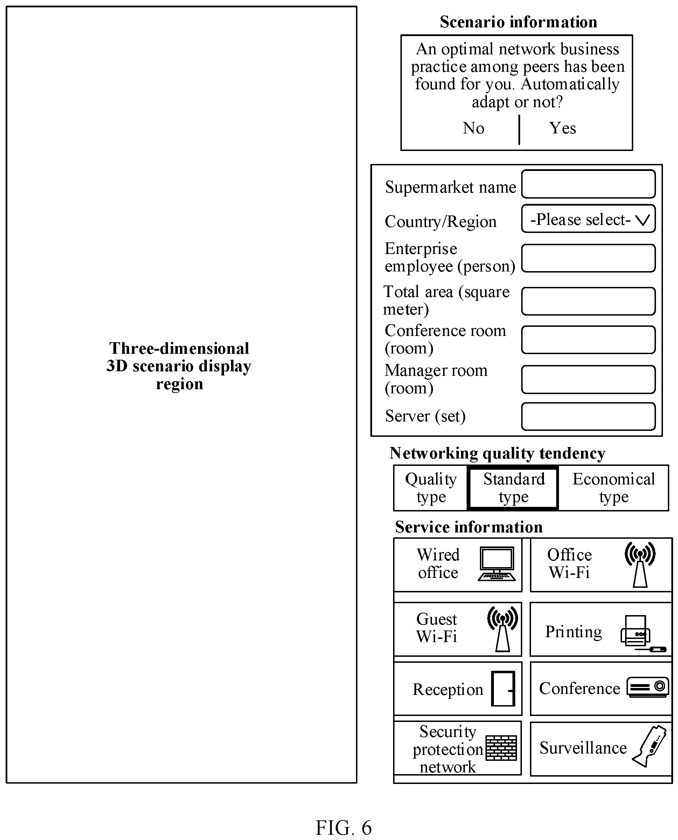

For the initial user intent input interface shown in FIG. 4, step S35 includes that the first device receives a scenario type selected by the user through the scenario type option; displays a corresponding scenario information option in the scenario information input region of the initial user intent input interface and displays a corresponding service information option in the service information input region of the initial user intent input interface based on the scenario type; and obtains scenario information input or selected through the scenario information option and service information input or selected through the service information option. After the user inputs in the initial user intent input interface shown in FIG. 4, the first device may further generate, based on the user input, a user intent input interface shown in FIG. 6.

FIG. 6 is a schematic diagram of a user intent input interface according to an embodiment of this application. Refer to FIG. 6. A scenario type corresponding to the user intent input interface is enterprise office. In the enterprise office scenario type, a site parameter provided by the first device includes a total area of a site, a conference room quantity, and a manager room quantity, a network user quantity including an enterprise employee quantity, and a network device quantity including a server quantity. In the enterprise office scenario type, an office service provided by the first device includes a wired office service, a wireless fidelity (wireless fidelity, Wi-Fi) service, a conference service (involving a projector and an electronic whiteboard), a printing service (involving a printer), a reception service (involving a smart doorbell), and the like. An IOT service includes a surveillance service, a guest service includes a guest Wi-Fi service, and a security protection service includes a security protection network service, and the like.

As shown in FIG. 6, after the scenario type of the user is determined, the method further includes that the first device matches an industry network service practice corresponding to the scenario type, where the industry network service practice includes a plurality of network services corresponding to the scenario type; the first device queries the user whether to automatically adapt to the industry network service practice; and if the user chooses to adapt, the network services corresponding to the industry network service practice are selected, or if the user chooses not to adapt, the network services corresponding to the industry network service practice are not selected, and the network services need to be selected by the user independently.

The industry network service practice recommended by the first device herein is also learned based on an existing network deployment configuration. For example, in an enterprise office scenario, if users whose quantity exceeds a proportion threshold or a quantity threshold select a first service, the first service becomes one item of the industry network service practice in the enterprise office scenario.

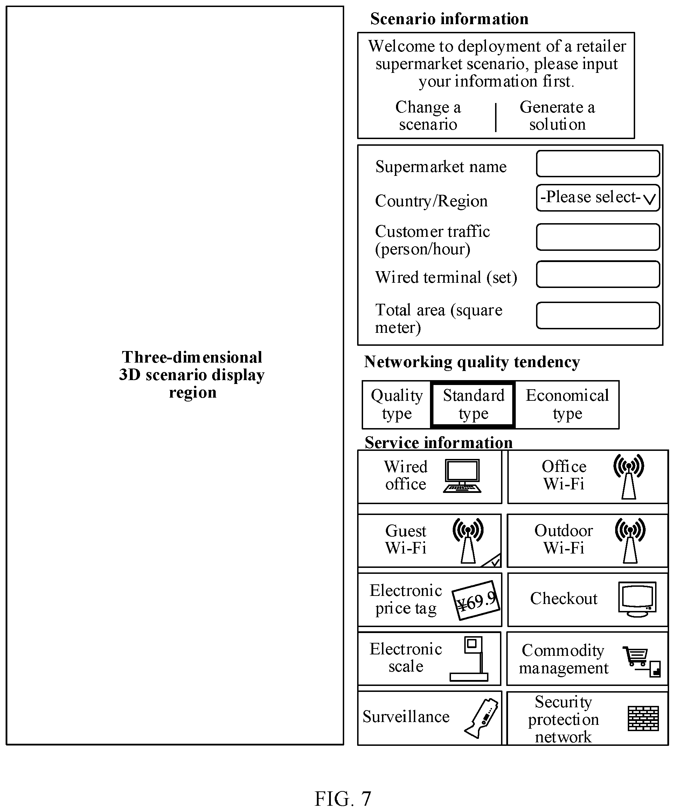

For the initial user intent input interface shown in FIG. 5, step S35 includes: that the first device obtains scenario information input or selected through the scenario information input region and service information input or selected through the service information input region includes: receiving service information input or selected by the user through the service information option; displaying a corresponding scenario information option in the scenario information input region of the initial user intent input interface based on the service information; and obtaining scenario information input or selected through the scenario information option. After the user inputs in the initial user intent input interface shown in FIG. 5, the first device may further generate, based on the user input, a user intent input interface shown in FIG. 7.

FIG. 7 is a schematic diagram of another user intent input interface according to an embodiment of this application. Refer to FIG. 7. A scenario type corresponding to the user intent input interface is a retailer supermarket scenario. In the retailer supermarket scenario type, a site parameter includes a total area of a site, a network user quantity including customer traffic, and a network device quantity including a wired terminal quantity. In the retailer supermarket scenario type, an office service includes a wired office service (involving a computer and a server) and an office Wi-Fi service (involving a mobile phone and an access point (access point, AP)), a guest service includes a guest Wi-Fi service and an outdoor Wi-Fi service, an IOT service includes a surveillance service (involving a camera), a security protection service includes a security protection network service, and a production service includes a checkout service (involving a cash register and a scanner), an electronic price tag service (involving an electronic price tag), an electronic scale service (involving an electronic scale), a commodity management service, and the like. The user can tap to select a service type, for example, the guest Wi-Fi service in FIG. 7.

As shown in FIG. 6 and FIG. 7, the user intent input interface further includes a name option, for example, a supermarket name or an enterprise name. The user intent input interface further includes a country/region option, configured to input a country or a region where a supermarket or an enterprise is located.

As shown in FIG. 6 and FIG. 7, the user intent input interface further includes a networking quality tendency option, configured to select a networking quality tendency. The networking quality tendency includes one of a quality type (high reliability and a high rate), a standard type (without special requirement and with reference to an industry standard), and an economical type (economical and capable of satisfying usage).

In another embodiment, the networking quality tendency may be further divided in a manner such as cost first or network quality first.

As shown in FIG. 6 and FIG. 7, the user intent input interface includes a plurality of options. Therefore, there are usually a plurality of rounds of interaction between the client and the first device, that is, the user may send an input instruction or a selection instruction to the first device once each time the user inputs or selects one option.

As shown in FIG. 6 and FIG. 7, the user intent input interface further includes a three-dimensional (3 dimensions, 3D) scenario display region.

Correspondingly, the method further includes: that the first device outputs, when the user selects a first network service through the service information input region, introduction information of the first network service at a location at which the first network service is arranged in the 3D scenario display region, where the first network service is any network service.

For example, a retailer supermarket scenario is used as an example. A 3D model of a shopping mall or a supermarket is displayed in the 3D scenario display region. The 3D model includes a cash register, a shelf, and the like. When the user selects an electronic price tag service, introduction information about the electronic price tag service is output at a location of the shelf. The introduction information may be in a text form or in another form.

Based on steps S34 and S35, in the solution provided in this application, the user only needs to input simple scenario information and service information to implement network deployment. Compared with that the user completes network planning and design, network deployment efficiency can be greatly improved.

S36: The first device obtains first network deployment configuration information of the user network based on the scenario information, the service information, and the deployment configuration model, where the first network deployment configuration information includes device information of at least one network device for planning the user network, a network topology of the network device, and a configuration parameter of the network device.

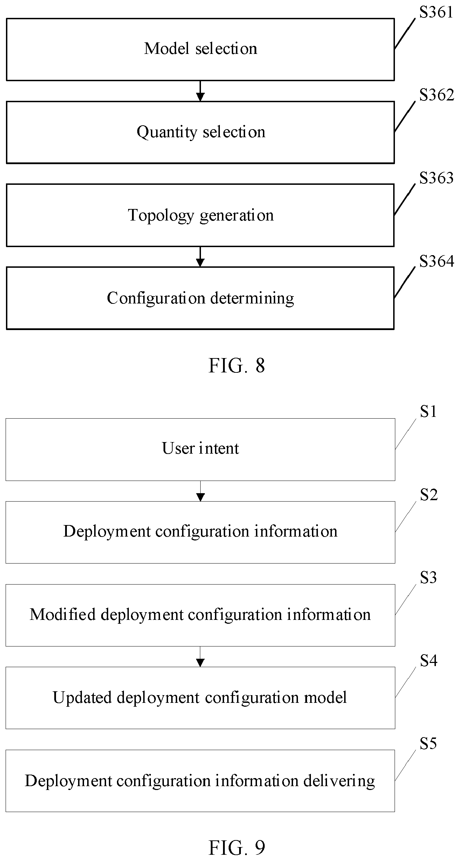

For example, the device information includes a device type, a device model, and a device quantity. Correspondingly, in step S36, the first device determines the first network deployment configuration information in a manner shown in FIG. 8. FIG. 8 is a flowchart of determining first network deployment configuration information according to an embodiment of this application. Refer to FIG. 8. A process includes the following steps.

S361: Model selection. The device type and the device model of the network device are determined based on the service information. Herein, the device type and the device model are determined by using the foregoing device type and device model determining submodel.

S362: Quantity selection. The device quantity of the network device is determined based on the scenario information. Herein, the device quantity of the network device is determined by using the foregoing device quantity determining submodel.

S363: Topology generation. The network topology is generated based on the device type, the device model, and the device quantity of the network device. Herein, the network topology is generated by using the foregoing topology generation submodel.

S364: Configuration determination. The configuration parameter of the network device is determined based on the network topology and the service information. Herein, the configuration parameter of the network device is determined by using the foregoing configuration parameter determining submodel.

For example, the service information indicates at least one network service; and that the device type and the device model of the network device are determined based on the service information includes:
that a device type and a device model that match each network service in the at least one network service are determined. The foregoing determining is completed by the foregoing device type and device model determining submodel. The device type and device model determining submodel may be further divided into a plurality of modules, which are respectively configured to implement selection of types and models of a terminal device, an access layer device, an aggregation layer device, a core layer device, and an egress border device.

For example, if the network service includes a Wi-Fi service and a surveillance service, the terminal device type in the device type that is needed includes an AP and a camera. If the network service includes an IOT service, an AP having an IOT card function is needed. That is, an AP device model range is selected. If the network service includes an outdoor Wi-Fi service, some outdoor APs need to be selected.

Generally, the first device may configure a default model for each terminal type, and the model corresponds to the standard type in the networking quality tendency. When the networking quality tendency is the quality type or the economical type, the first device may determine a device model corresponding to the quality type or the economical type based on the networking quality tendency. That is, when the device type and the device model that match each network service in the at least one network service are determined, the device type and the device model are first determined based on the network service, and then the device model is determined based on the networking quality tendency.

In the foregoing manner, in addition to the type and the model of the terminal device, a model of another layer device may also be determined based on the network service. For example, because it is determined, based on the network service, that a camera and an AP are needed, and the camera and the AP need to be powered by an access layer device, an access network device of a model with a power over ethernet (power over ethernet, POE) needs to be selected. For another example, because it is determined, based on the network service, that a camera is needed. In this case, if an access switch is to be selected, a switch of a model of a security protection series is selected to be used.

For example, the network device includes a terminal device, an access layer device, an aggregation layer device, a core layer device, and an egress border device. Herein, the terminal device, the access layer device, the aggregation layer device, the core layer device, and the egress border device are listed in a sequence from a lower layer to an upper layer.

That the device quantity of the network device is determined based on the scenario information includes:
substituting a first parameter that is in the scenario information and that corresponds to a first terminal device into a fitting function, to determine a quantity of first terminal devices, where the first terminal device is any terminal device, and the fitting function is a fitting function relationship between the first parameter and the quantity of first terminal devices; and
determining a quantity of access layer devices, a quantity of aggregation layer devices, a quantity of core layer devices, and a quantity of egress border devices based on a total quantity of all terminal devices.

Herein, the fitting function belongs to the foregoing device quantity determining submodel. The device quantity determining submodel may be divided into a plurality of modules to calculate the quantities of terminal devices, access layer devices, aggregation layer devices, core layer devices, and egress border devices. For example, a module for calculating the quantity of terminal devices mainly determines the quantity of various terminal devices based on a parameter in the scenario information; a module for calculating the quantity of access layer devices mainly determines the quantity of access layer devices based on the total quantity of terminal devices, a model of an access network device, a networking tendency, and the like; and modules for calculating the quantities of aggregation layer devices, core layer devices, and egress border devices subsequently are similar to the module for calculating the quantity of access layer devices, and are not described herein again.

For example, in a retailer supermarket scenario, a manner of calculating a quantity of APs of an IOT card based on the fitting function is: K1 × a total area of the supermarket, where K1 is a coefficient learned by the device quantity determining submodel, and a value of K1 is related to a proportion of a supermarket sales region to the total area. For another example, for an outdoor region, the outdoor region is mainly a parking lot, and an area of the parking lot is related to a real-time customer flow of a supermarket and a total area of the supermarket. Therefore, a calculation manner is similar to that in the supermarket.

For another example, in an office scenario, a manner of calculating a quantity of APs based on the fitting function is: the quantity of APs = J × A, N × A = K2 × S, where a quantity of conference rooms is N, a size of the conference room is A, a proportion of a total area of the conference room to a total area of an office region is K2, and a coefficient of the area of the conference room and the AP is J. In addition to the total area of the conference room, the size of the conference room, and the quantity of conference rooms, parameters such as a people flow and a quantity of independent compartments may also be considered.

For another example, in the office scenario, a manner of calculating a quantity of electronic whiteboards based on the fitting function is: the quantity of electronic whiteboards = K3 × the quantity of conference rooms, where K3 is a coefficient learned by the device quantity determining submodel.

After the total quantity of terminal devices is determined, the device quantity determining submodel may determine the quantity of access layer devices, the quantity of aggregation layer devices, the quantity of core layer devices, and the quantity of egress border devices (for example, gateway devices) based on the quantity relationship between the lower-layer device and the upper-layer device. It should be noted that the quantity of one or more of the access layer devices, the aggregation layer devices, the core layer devices, and the egress border devices may be 0, that is, the device is not actually deployed in the user network.

For example, if there are M terminals and N APs in total, an access layer device (for example, an access switch) needs to provide at least M+N ports. A quantity of access devices may be determined based on a port quantity corresponding to a recommended model of the access layer device.

The access switch is used as an example. If no specific model of the access switch is recommended in the previous step, or a recommended model of the access switch has a plurality of submodels, for example, a series of access switches generally have 12 ports, 24 ports, and 48 ports, and the quantity of ports on a final determined access switch is P, the quantity of access switches is calculated by rounding up (M+N)/P. 12, 24, and 48 may be substituted in sequence for calculation, and a threshold of the quantity of access switches of a switch is set to K4. If (M+N)/P > K4, it indicates that the quantity of access switches is too large, and a larger P is selected for recalculation until (M+N)/P ≤ K4. In this way, an obtained quantity of access switches may be small, management is convenient, and use is flexible. The quantities of aggregation layer devices, core layer devices, and egress border devices may be determined in a sequence of the egress border device, the core layer device, and the aggregation layer device. That is, if all access switches can be connected to one egress border device, the core layer device to the aggregation layer device are not needed. If ports on the egress border device cannot satisfy access of all access switches, the core layer device needs to be arranged. Similarly, if a maximum quantity of core layer devices can satisfy an access requirement of the access switches, the aggregation layer device needs not to be arranged, otherwise, the aggregation layer device needs to be arranged. In the foregoing process of determining whether each layer device needs to be arranged, a quantity of upper-layer devices can be determined based on a quantity of ports of the upper-layer devices and a quantity of lower-layer devices that need to be accessed.

For example, the user needs to open a retail store of 1000 square meters, and needs a surveillance service, a wireless Wi-Fi service, and a checkout service. The first device first calculates, by using the model, that 12 cameras, 10 APs, and 3 cash registers are needed. Therefore, 25 wired access interfaces are needed. Based on this, the first device further calculates, by using the model, that two 24-port access switches are needed to provide access. Because a firewall device (the egress border device) has a maximum of 8 interfaces, based on this, the first device further determines, by using the model, that one firewall device can complete access of two access switches. Therefore, a quantity of aggregation layer devices and a quantity of core layer devices do not need to be set. That is, the quantity of access layer devices is 2, the quantity of egress border devices is 1, and the quantity of aggregation layer devices and the quantity of core layer devices are both 0.

After the device type, the device model, and the device quantity of the network device are determined, the network topology generation submodel generates the network topology based on a network topology generation rule. For example, each terminal device is sequentially connected to each port of an access layer device, and each access layer device is sequentially connected to each port of an aggregation layer device, to complete topology generation through the connection layer by layer. If the quantity of devices at a layer is 0, cross-layer connection is needed. For example, if there is no core layer device, the aggregation layer device is directly connected to the egress border device.

After the network topology is determined, the configuration parameter may be delivered to each device based on the service of the user network.

For example, in a retailer supermarket scenario, the network service includes a guest network, a security protection network, a checkout network, an office network, and the like. The guest network of the supermarket is authentication-free for access. A wired network needs to be independently planned for a security protection network, and wireless access is not provided. The office network provides both wired and wireless access, and the user needs to input a user name and a password for authentication for the wireless access. The checkout network provides both wired and wireless access, which both require password authentication, and a wireless network needs to be hidden for protection. Based on the foregoing rules, the deployment configuration model corresponds to the retailer supermarket scenario and has the foregoing network service to output the configuration parameter. For example, a trunk mode is used between network devices, a downlink interface of a switch needs to simultaneously allow a plurality of VLANs, the allowed VLAN is a port corresponding to a network VLAN to which a terminal belongs, an access mode is used on an access end, a port matching traffic is used for connection in terms of link selection, and an SSID and authentication mode of an AP are a wireless SSID and authentication mode.

For another example, in an office scenario, the network service includes a guest network, a security protection network, an IOT network, an office network, reception, and the like. The guest network in the office scenario is authentication-free for access. A wired network needs to be independently planned for security protection, and wireless access is not provided. The office network provides both wired and wireless access, and the wired and wireless access are authenticated through 802. 1x which is secure. The IOT network provides both wired and wireless access in a MAC-authenticated access manner, and a wireless network needs to be hidden for protection. The reception is separated from the office network, and a password is needed for authentication to prevent another guest from occupying reception traffic. Based on the foregoing rules, the deployment configuration model corresponds to the office scenario and has the foregoing network service to output the configuration parameter. For example, a trunk mode is used between network devices, a VLAN is independently planned in the office network, an office Wi-Fi uses a pre-shared key (pre-shared key, PSK) mode for authentication, a VLAN is independently planned in the IOT network, a wireless IOT hides an SSID, and the like.

In this embodiment of this application, the deployment configuration model may further be updated. In other words, the method further includes: updating the deployment configuration model.

Update of the fitting function in the device quantity determining submodel is used as an example, and the method includes: storing the quantity of first terminal devices; and updating, in response to a change in the quantity of first terminal devices due to modification, or a change in the quantity of first terminal devices when a network goes online, the fitting function based on the first parameter and a changed quantity of first terminal devices.

For example, the quantity of APs is determined based on K1 × the total area of the supermarket. If the user subsequently adjusts the quantity of APs, a quantity feedback result is re-involved in function fitting to obtain a new K1 value, so that quantity recommendation is more accurate. The fitting herein refers to fitting a curve, so that the curve can be as close as possible to each sample point.

For another example, the quantity of APs is determined based on J × A. If the user subsequently adjusts the quantity of corresponding APs, a quantity feedback result is re-involved in function fitting to obtain a new K2 value and a new J value, so that quantity recommendation is more accurate.

In this solution, the deployment configuration model is automatically updated to improve output precision of the deployment configuration model, so that the network deployment configuration output by using the deployment configuration model better conforms with a user requirement.

Optionally, the method further includes: obtaining the first network deployment configuration information of the user network based on the user intent, where the first network deployment configuration information includes the device information of at least one network device for planning the user network, the network topology of the network device, and the configuration parameter of the network device.

For example, the obtaining the first network deployment configuration information of the user network based on the user intent includes:
outputting a design document, an implementation solution, and an implementation script, where the design document includes a project background and a design objective that are obtained based on the user intent, the device information of the network device, and the network topology of the network device; the implementation solution includes the device information of the network device, the network topology of the network device, the configuration parameter of the network device, and a construction guide; and the implementation script includes the automation script generated based on the configuration parameter of the network device.

The design document mainly reflects a design concept and idea of system generation configuration, making an automatic design more reliable. A configuration parameter in the design document includes a device naming plan, an SSID usage plan, a VLAN usage plan, a wireless performance design, and the like. In addition to the project background, the design objective, the device information, and the network topology, the design document may further include a requirement analysis, a design principle, an AP location diagram, an integrated cabling design, a test solution, and the like. The foregoing content may be obtained based on the user intent, the device information, the network topology, and the configuration parameter. For example, the requirement analysis may be based on a scenario in which the user needs to establish a network with a specific function and that is indicated in the user intent, to analyze a network requirement of the user. The AP location diagram may be determined based on the quantity of APs, an area and a quantity of rooms in the site parameter, whether an outdoor Wi-Fi is needed in the service information, and the like. The integrated cabling design may be determined based on the network topology and site information. The test solution may be determined based on the network topology and a parameter configuration.

The implementation solution mainly includes detailed network configuration information to help onsite implementation personnel perform network installation and implementation. The network topology includes a logical topology, a physical topology, and the like. The configuration parameter may include a VLAN device plan, a device interconnection design, a device management IP plan, a WLAN parameter plan, and a site configuration plan. The construction guide instructs the implementation personnel to correctly assemble the network, for example, how to connect devices and how to configure some network parameters.

Optionally, the method further includes:
S37: The first device synchronizes the device information to a first system through a first application programming interface (application programming interface, API), where the first system is configured for the user to purchase a network device.

For example, the first system is a device ordering system. After the first device synchronizes the device information to the first system, the first system may directly output a purchase order corresponding to the device information to the user, or may output a device purchase page to the user, so that the user selects to purchase.

After the user successfully purchases the device, the first system generates a user order, where the user order includes an electronic serial number (electronic serial number, ESN) serial number of the purchased device, and the first system sends the user order to the first device. After the network device corresponding to the ESN serial number in the user order goes online, the first device delivers the configuration parameter to the network device.

By using the foregoing method, an entire process from network deployment configuration recommendation to device purchase to network deployment configuration delivery can be implemented, thereby improving network deployment efficiency.

Optionally, the method further includes:
S38: The first device synchronizes the configuration parameter to a second system through a second API, where the second system is configured to manage and control the network device.

FIG. 9 is a schematic diagram of an overall process of network deployment configuration according to an embodiment of this application. As shown in FIG. 9,

S1: A user inputs user intent, and a first device obtains the user intent; S2: The first device outputs corresponding deployment configuration information; S3: The user may modify the deployment configuration information, and the first device obtains modified deployment configuration information; S4: When the user modifies the deployment configuration information, the first device may update a deployment configuration model based on the modified deployment configuration information; and S5: The first device delivers the modified or unmodified deployment configuration information to a second system, so that the second system configures the deployment configuration information on each network device. The first device encapsulates the deployment configuration information into a solution package, and then delivers the solution package to the second system.

After the second system receives the deployment configuration information, an execution process includes automatic parsing, northbound layer processing, southbound layer processing, and the like. The automatic parsing refers to parsing the solution package generated by the first device, and then automatically executing content in the solution package. The northbound layer processing is UI interface layer processing. A plurality of UI interfaces are defined in the solution package, and these UI interfaces are automatically executed and then delivered to the northbound layer. The southbound layer processing is device interface layer processing, which translates a UI interface provided by the northbound layer into a device command and delivers the device command to the network device.

It can be seen from FIG. 9 that, the first device implements network deployment configuration based on the user intent; the first device improves precision of the network deployment configuration by updating the deployment configuration model based on feedback and modification of the user for a network deployment configuration solution; and the first device encapsulates the deployment configuration information into a packet and delivers the packet to the second system, and the second system configures each device to complete network deployment.

Optionally, the method further includes:
S39: The first device delivers the configuration parameter to the network device through a network management interface.

The configuration parameter includes a configuration parameter of each device in the user network, including configuration parameters of each terminal device, each access layer device, each aggregation layer device, each core layer device, and each egress border device. The first device sends the configuration parameter of each device to each device respectively, so that configuration of each device is activated, thereby activating the entire user network.

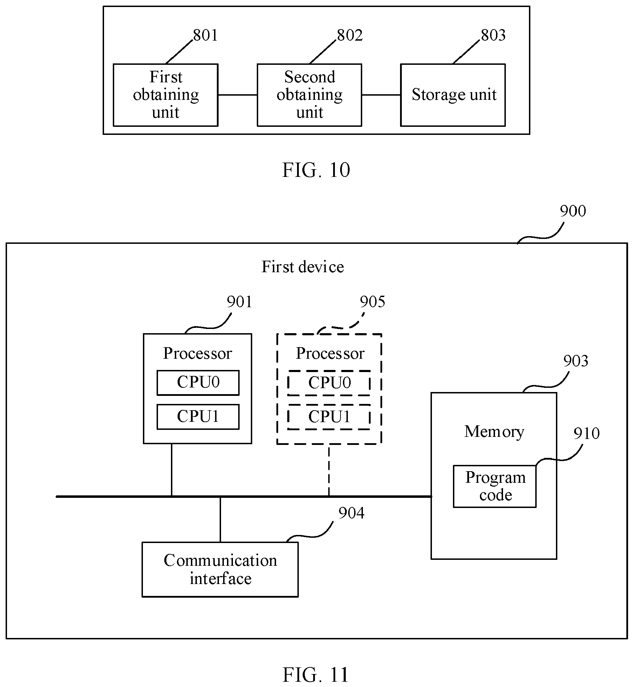

FIG. 10 is a block diagram of a network deployment configuration apparatus according to an embodiment of this application. The network deployment configuration apparatus may be implemented as an entire first device or a part of a first device by using software, hardware, or a combination thereof. The network deployment configuration apparatus may include: a first obtaining unit 801 and a second obtaining unit 802.

The first obtaining unit 801 is configured to obtain user intent, where the user intent is for deploying a user network, the user intent includes scenario information of the user network and service information of the user network, the scenario information indicates a usage scenario corresponding to the user network, and the service information indicates at least one network service deployed in the user network; and
the second obtaining unit 802 is configured to obtain first network deployment configuration information of the user network based on the user intent, where the first network deployment configuration information includes device information of at least one network device for planning the user network, a network topology of the network device, and a configuration parameter of the network device.

Optionally, the scenario information includes at least one of the following parameters: a scenario type, a site parameter, a network user quantity, and a network device quantity.

Optionally, the service information includes at least one of the following services: an office service, a guest service, an Internet of Things IOT service, a security protection service, and a production service.

Optionally, the user intent further includes a networking quality tendency, and the networking quality tendency indicates intent of a user for network quality and a network cost of the user network.

Optionally, the second obtaining unit 802 is configured to output an initial user intent input interface, where the user intent input interface includes a scenario information input region and a service information input region; and
the first obtaining unit 801 is configured to obtain scenario information input or selected through the scenario information input region and service information input or selected through the service information input region.

Optionally, the scenario information input region of the initial user intent input interface includes a scenario type option; and
the first obtaining unit 801 is configured to receive a scenario type selected by the user through the scenario type option; display a corresponding scenario information option in the scenario information input region of the initial user intent input interface and display a corresponding service information option in the service information input region of the initial user intent input interface based on the scenario type; and obtain scenario information input or selected through the scenario information option and service information input or selected through the service information option.

Optionally, the service information input region of the initial user intent input interface includes a service information option; and
the first obtaining unit 801 is configured to receive service information input or selected by the user through the service information option; display a corresponding scenario information option in the scenario information input region of the initial user intent input interface based on the service information; and obtain scenario information input or selected through the scenario information option.

Optionally, the user intent input interface further includes a three-dimensional 3D scenario display region; and
the first obtaining unit 801 is configured to output, when the user selects a first network service through the service information input region, introduction information of the first network service at a location at which the first network service is arranged in the 3D scenario display region, where the first network service is any network service.

Optionally, the second obtaining unit 802 is configured to obtain the first network deployment configuration information of the user network based on the scenario information, the service information, and a deployment configuration model.

Optionally, the first obtaining unit 801 is configured to obtain second network deployment configuration information, where the second network deployment configuration information is device information and a configuration parameter of any user network after deployment, or the second network deployment configuration information is network deployment configuration information obtained by modification of the user based on third network deployment configuration information; and
obtain the deployment configuration model based on the scenario information, the service information, the second network deployment configuration information, and a to-be-trained deployment configuration model, where the deployment configuration model belongs to an artificial intelligence model.

Optionally, the device information includes a device type, a device model, and a device quantity; and
the second obtaining unit 802 is configured to determine the device type and the device model of the network device based on the service information;
determine the device quantity of the network device based on the scenario information;
generate the network topology based on the device type, the device model, and the device quantity of the network device; and
determine the configuration parameter of the network device based on the network topology and the service information.

Optionally, the service information indicates at least one network service; and
the second obtaining unit 802 is configured to determine a device type and a device model that match each network service in the at least one network service.

Optionally, the network device includes a terminal device, an access layer device, an aggregation layer device, a core layer device, and an egress border device; and
the second obtaining unit 802 is configured to substitute a first parameter that is in the scenario information and that corresponds to a first terminal device into a fitting function, to determine a quantity of first terminal devices, where the first terminal device is any terminal device, and the fitting function is a fitting function relationship between the first parameter and the quantity of first terminal devices; and
determine a quantity of access layer devices, a quantity of aggregation layer devices, a quantity of core layer devices, and a quantity of egress border devices based on a total quantity of all terminal devices.

Optionally, the apparatus further includes:
a storage unit 803, configured to store the quantity of first terminal devices; and
the first obtaining unit 801 is further configured to update, in response to a change in the quantity of first terminal devices due to modification, or a change in the quantity of first terminal devices when a network goes online, the fitting function based on the first parameter and a changed quantity of first terminal devices.

Optionally, the second obtaining unit 802 is further configured to synchronize the device information to a first system through a first application programming interface API, where the first system is configured for the user to purchase a network device.

Optionally, the second obtaining unit 802 is further configured to synchronize the configuration parameter to a second system through a second API, where the second system is configured to manage and control the network device.

Optionally, the second obtaining unit 802 is further configured to deliver the configuration parameter to the network device through a network management interface.

Optionally, the second obtaining unit 802 is configured to output a design document, an implementation solution, and an implementation script, where the design document includes a project background and a design objective that are obtained based on the user intent, the device information of the network device, and the network topology of the network device; the implementation solution includes the device information of the network device, the network topology of the network device, the configuration parameter of the network device, and a construction guide; and the implementation script includes an automation script generated based on the configuration parameter of the network device.

It should be noted that, when the network deployment configuration apparatus provided in the foregoing embodiment works, division of the foregoing function units is merely used as an example for description. In actual application, the foregoing functions may be allocated to different function units for implementation based on requirements, that is, an internal structure of a device is divided into different function units to implement all or a part of the functions described above. In addition, the network deployment configuration apparatus provided in the foregoing embodiment is based on the same concept as the network deployment configuration method embodiment. For a specific implementation process, refer to the method embodiment. Details are not described herein again.

The descriptions of procedures corresponding to the foregoing accompanying drawings have respective focuses. For a part that is not described in detail in a procedure, refer to related descriptions of another procedure.

FIG. 11 is a schematic diagram of a structure of a network deployment configuration device 900 according to an example embodiment of this application. The network deployment configuration device 900 shown in FIG. 11 is configured to perform operations involved in the network deployment configuration method shown in FIG. 2. The network deployment configuration device 900 may be a first device in an application scenario. The foregoing first device may be deployed in a public cloud. A client, a first system, and a second system access the foregoing first device through the Internet internet. The foregoing first device generates network deployment configuration information based on a request of the client, and provides a network deployment configuration cloud service for the client. The first device may further be deployed in a data center, a private cloud, or the like. The network deployment configuration device 900 may be implemented by using a general bus architecture.

As shown in FIG. 11, the network deployment configuration device 900 includes at least one processor 901, a memory 903, and at least one communication interface 904.

The processor 901 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to content disclosed in embodiments of the present invention. Alternatively, the processor may be a combination of processors implementing a computing function, for example, a combination of one or more microprocessors, or a combination of a DSP and a microprocessor.

Optionally, the network deployment configuration device 900 further includes a bus. The bus is configured to transmit information between components of the network deployment configuration device 900. The bus may be a peripheral component interconnect (peripheral component interconnect, PCI for short) bus, an extended industry standard architecture (extended industry standard architecture, EISA for short) bus, or the like. The bus may include an address bus, a data bus, a control bus, and the like. For ease of representation, only one bold line is used to represent the bus in FIG. 11, but this does not mean that there is only one bus or only one type of bus.

The memory 903 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer. However, the memory 903 is not limited thereto. For example, the memory 903 exists independently, and is connected to the processor 901 through the bus. Alternatively, the memory 903 and the processor 901 may be integrated together.

The communication interface 904 is applicable to any transceiver-type apparatus, and is configured to communicate with another device or a communication network. The communication network may be Ethernet, a radio access network (RAN), a wireless local area network (wireless local area network, WLAN), or the like. The communication interface 904 may include a wired communication interface, and may further include a wireless communication interface. Specifically, the communication interface 904 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 904 may be configured for communication between the network deployment configuration device 900 and another device.

During specific implementation, in an embodiment, the processor 901 may include one or more CPUs, for example, a CPU 0 and a CPU 1 shown in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network deployment configuration device 900 may include a plurality of processors, for example, the processor 901 and the processor 905 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network deployment configuration device 900 may further include an output device and an input device. The output device communicates with the processor 901, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 901, and may receive an input from a user in a plurality of manners. For example, the input device may be a mouse, a keyboard, a touchscreen device, or a sensing device.

In some embodiments, the memory 903 is configured to store program code 910 for executing the solutions of this application, and the processor 901 may execute the program code 910 stored in the memory 903. That is, the network deployment configuration device 900 may implement, by using the processor 901 and the program code 910 in the memory 903, the network deployment configuration method provided in the method embodiment. The program code 910 may include one or more software modules. Optionally, the processor 901 may alternatively store program code or instructions for executing the solutions of this application.

In a specific embodiment, the network deployment configuration device 900 in this embodiment of this application may correspond to the first network device in each foregoing method embodiment. The processor 901 in the network deployment configuration device 900 reads instructions in the memory 903, to enable the network deployment configuration device 900 shown in FIG. 11 to perform all or some operations performed by the first network device.

Specifically, the processor 901 is configured to: send a probe packet to at least one remote server through the communication interface, where the probe packet includes a DHCP packet or a DHCPv6 packet; and determine a status of the at least one remote server based on a response status of the at least one remote server.

For brevity, other optional implementations are not described herein again.

For another example, the network deployment configuration device 900 in this embodiment of this application may correspond to the second network device in each foregoing method embodiment. The processor 901 in the network deployment configuration device 900 reads instructions in the memory 903, to enable the network deployment configuration device 900 shown in FIG. 11 to perform all or some operations performed by the second network device.

Specifically, the processor 901 is configured to receive, through the communication interface, indication information sent by a first network device; and determine a status of at least one remote server based on the indication information.

For brevity, other optional implementations are not described herein again.

The network deployment configuration device 900 may further correspond to the network deployment configuration apparatus shown in FIG. 10, and each functional module in the network deployment configuration apparatus is implemented by using software of the network deployment configuration device 900. In other words, the functional module included in the network deployment configuration apparatus is generated after the processor 901 of the network deployment configuration device 900 reads the program code 910 stored in the memory 903.

Steps of the network deployment configuration method shown in FIG. 2 and FIG. 3 are completed by using an integrated logic circuit of hardware in the processor of the network deployment configuration device 900, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

An embodiment of this application further provides a chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing network deployment configuration methods.

It should be understood that the processor may be a CPU, or may be another general-purpose processor, a DSP, an ASIC, an FPGA or another programmable logic device, a discrete gate or a transistor logic device, or a discrete hardware component. The general-purpose processor may be a microprocessor or any conventional processor. It should be noted that the processor may be a processor that supports an ARM architecture.

Further, in an optional embodiment, there are one or more processors and one or more memories. Optionally, the memory and the processor may be integrated together, or the memory and the processor may be separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The nonvolatile memory may be a ROM, a PROM, an EPROM, an EEPROM, or a flash memory. The volatile memory may be a RAM, and is used as an external cache. By way of example, and not limitation, many forms of RAMs may be used, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a computer device, the computer device is enabled to perform the network deployment configuration method provided above.

In an embodiment of this application, a computer program product including instructions is further provided. When the computer program product is run on a computer device, the computer device is enabled to perform the network deployment configuration method provided above.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of procedures or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or a part of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A network deployment configuration method, wherein the method comprises:
obtaining user intent, wherein the user intent is for deploying a user network, the user intent comprises scenario information of the user network and service information of the user network, the scenario information indicates a usage scenario corresponding to the user network, and the service information indicates at least one network service deployed in the user network; and
obtaining first network deployment configuration information of the user network based on the user intent, wherein the first network deployment configuration information comprises device information of at least one network device for planning the user network, a network topology of the network device, and a configuration parameter of the network device.

2. The network deployment configuration method according to claim 1, wherein the scenario information comprises at least one of the following parameters: a scenario type, a site parameter, a network user quantity, and a network device quantity.

3. The network deployment configuration method according to claim 1 or 2, wherein the service information comprises at least one of the following services: an office service, a guest service, an Internet of Things IOT service, a security protection service, and a production service.

4. The network deployment configuration method according to any one of claims 1 to 3, wherein the user intent further comprises a networking quality tendency, and the networking quality tendency indicates intent of a user for network quality and a network cost of the user network.

5. The network deployment configuration method according to any one of claims 1 to 4, wherein the obtaining user intent comprises:
outputting an initial user intent input interface, wherein the user intent input interface comprises a scenario information input region and a service information input region; and
obtaining scenario information input or selected through the scenario information input region and service information input or selected through the service information input region.

6. The network deployment configuration method according to claim 5, wherein the scenario information input region of the initial user intent input interface comprises a scenario type option; and
the obtaining scenario information input or selected through the scenario information input region and service information input or selected through the service information input region comprises:
receiving a scenario type selected by the user through the scenario type option;
displaying a corresponding scenario information option in the scenario information input region of the initial user intent input interface and displaying a corresponding service information option in the service information input region of the initial user intent input interface based on the scenario type; and
obtaining scenario information input or selected through the scenario information option and service information input or selected through the service information option.

7. The network deployment configuration method according to claim 5, wherein the service information input region of the initial user intent input interface comprises a service information option; and
the obtaining scenario information input or selected through the scenario information input region and service information input or selected through the service information input region comprises:
receiving service information input or selected by the user through the service information option;
displaying a corresponding scenario information option in the scenario information input region of the initial user intent input interface based on the service information; and
obtaining scenario information input or selected through the scenario information option.

8. The network deployment configuration method according to any one of claims 5 to 7, wherein the user intent input interface further comprises a three-dimensional 3D scenario display region; and
the obtaining user intent further comprises:
outputting, when the user selects a first network service through the service information input region, introduction information of the first network service at a location at which the first network service is arranged in the 3D scenario display region, wherein the first network service is any network service.

9. The network deployment configuration method according to any one of claims 1 to 8, wherein the obtaining first network deployment configuration information of the user network based on the user intent comprises:
obtaining the first network deployment configuration information of the user network based on the scenario information, the service information, and a deployment configuration model.

10. The network deployment configuration method according to claim 9, wherein before the obtaining the first network deployment configuration information of the user network based on the scenario information, the service information, and a deployment configuration model, the method further comprises:
obtaining second network deployment configuration information, wherein the second network deployment configuration information is device information and a configuration parameter of any user network after deployment, or the second network deployment configuration information is network deployment configuration information obtained by modification of the user based on third network deployment configuration information; and
obtaining the deployment configuration model based on the scenario information, the service information, the second network deployment configuration information, and a to-be-trained deployment configuration model, wherein the deployment configuration model belongs to an artificial intelligence model.

11. The network deployment configuration method according to any one of claims 1 to 8, wherein the device information comprises a device type, a device model, and a device quantity; and
the obtaining first network deployment configuration information of the user network based on the user intent comprises:
determining the device type and the device model of the network device based on the service information;
determining the device quantity of the network device based on the scenario information;
generating the network topology based on the device type, the device model, and the device quantity of the network device; and
determining the configuration parameter of the network device based on the network topology and the service information.

12. The network deployment configuration method according to claim 11, wherein the service information indicates at least one network service; and
the determining the device type and the device model of the network device based on the service information comprises:
determining a device type and a device model that match each network service in the at least one network service.

13. The network deployment configuration method according to claim 11 or 12, wherein the network device comprises a terminal device, an access layer device, an aggregation layer device, a core layer device, and an egress border device; and
the determining the device quantity of the network device based on the scenario information comprises:
substituting a first parameter that is in the scenario information and that corresponds to a first terminal device into a fitting function, to determine a quantity of first terminal devices, wherein the first terminal device is any terminal device, and the fitting function is a fitting function relationship between the first parameter and the quantity of first terminal devices; and
determining a quantity of access layer devices, a quantity of aggregation layer devices, a quantity of core layer devices, and a quantity of egress border devices based on a total quantity of all terminal devices.

14. The network deployment configuration method according to claim 13, wherein the method further comprises:
storing the quantity of first terminal devices; and
updating, in response to a change in the quantity of first terminal devices due to modification, or a change in the quantity of first terminal devices when a network goes online, the fitting function based on the first parameter and a changed quantity of first terminal devices.

15. The network deployment configuration method according to any one of claims 1 to 14, wherein the method further comprises:
synchronizing the device information to a first system through a first application programming interface API, wherein the first system is configured for the user to purchase a network device.

16. The network deployment configuration method according to any one of claims 1 to 15, wherein the method further comprises:
synchronizing the configuration parameter to a second system through a second API, wherein the second system is configured to manage and control the network device.

17. The network deployment configuration method according to any one of claims 1 to 16, wherein the method further comprises:
delivering the configuration parameter to the network device through a network management interface.

18. The network deployment configuration method according to any one of claims 1 to 16, wherein the obtaining first network deployment configuration information of the user network based on the user intent comprises:
outputting a design document, an implementation solution, and an implementation script, wherein the design document comprises a project background and a design objective that are obtained based on the user intent, the device information of the network device, and the network topology of the network device; the implementation solution comprises the device information of the network device, the network topology of the network device, the configuration parameter of the network device, and a construction guide; and the implementation script comprises an automation script generated based on the configuration parameter of the network device.

19. A network deployment configuration apparatus, wherein the apparatus comprises:
a first obtaining unit, configured to obtain user intent, wherein the user intent is for deploying a user network, the user intent comprises scenario information of the user network and service information of the user network, the scenario information indicates a usage scenario corresponding to the user network, and the service information indicates at least one network service deployed in the user network; and
a second obtaining unit, configured to obtain first network deployment configuration information of the user network based on the user intent, wherein the first network deployment configuration information comprises device information of at least one network device for planning the user network, a network topology of the network device, and a configuration parameter of the network device.

20. A network deployment configuration device, wherein the network deployment configuration device comprises a processor and a memory, the memory is configured to store a software program, and the processor executes the software program stored in the memory, to enable the network deployment configuration device to implement the method according to any one of claims 1 to 18.

21. A computer-readable storage medium, wherein the computer-readable storage medium is configured to store program code executed by a processor, and the program code comprises instructions for implementing the method according to any one of claims 1 to 18.
